**Europäisches Patentamt**

**European Patent Office**

**Office européen des brevets**

(19)

(11) Veröffentlichungsnummer : **0 221 432**
**B1**

(12) **EUROPÄISCHE PATENTSCHRIFT**

(45) Veröffentlichungstag der Patentschrift :
**15.03.89**

(21) Anmeldenummer : **86114545.6**

(22) Anmeldetag : **21.10.86**

(51) Int. Cl.[4] : **F 16 F 13/00, B 60 K 5/12**

(54) **Hydraulisch gedämpftes elastisches Lager.**

(30) Priorität : **28.10.85 DE 3538262**

(43) Veröffentlichungstag der Anmeldung :
**13.05.87 Patentblatt 87/20**

(45) Bekanntmachung des Hinweises auf die Patenterteilung : **15.03.89 Patentblatt 89/11**

(84) Benannte Vertragsstaaten :
**DE ES FR GB IT SE**

(56) Entgegenhaltungen :
**EP-A- 0 105 794**
**EP-A- 0 133 122**
**EP-A- 0 161 147**
**CH-A- 415 184**
**DE-A- 2 503 581**
**DE-A- 3 233 456**
**DE-U- 6 600 208**
**FR-A- 1 540 380**
**FR-A- 2 415 241**
**US-A- 4 043 545**
**US-A- 4 331 224**
**INGENIEURS DE L'AUTOMOBILE, Nr. 3, April 1984, Seiten 21-30, Paris, FR; B. RENZO: "Etude d'une gamme de supports-moteur à fort niveau d'amortissement par utilisation d'un fluide non newtonien"**

(73) Patentinhaber : **Continental Aktiengesellschaft**
**Königsworther Platz 1**
**D-3000 Hannover 1 (DE)**

(72) Erfinder : **Bork, Karl-Heinz**
**Birkenweg 61**
**D-3008 Garbsen 4 (DE)**
Erfinder : **Eberhard, Günter, Dr.**
**Knülweg 1**
**D-3007 Gehrden 1 (DE)**
Erfinder : **Fischer, Bernhard**
**Otto-Wels-Strasse 9**
**D-3000 Hannover 91 (DE)**
Erfinder : **Heitzig, Jürgen**
**Geibelstrasse 14**
**D-3000 Hannover 1 (DE)**
Erfinder : **Schmelzer, Wilfried**
**Wilhelm-Rabe-Strasse 18**
**D-3014 Laatzen 3 (DE)**

## Beschreibung

Die Erfindung bezieht sich auf hydraulisch gedämpfte elastische Lager gemäß dem Oberbegriff des Patentanspruchs 1.

Die Dämpfungsscheibe solcher Lager wird im Gebrauch durch die ständig wechselnden, den Gummifederkörper verformenden Belastungskräfte zu gleichlaufenden Bewegungen veranlaßt, wobei sie infolge des entgegenstehenden Strömungswiderstandes des Dämpfungsmediums — meistens einer hochviskosen Flüssigkeit — die Schwingungsausschläge noch im Entstehen rasch und wirksam abbremst. Um die unvermeidlich damit verbundene Geräuschübertragung nach Möglichkeit einzudämmen, hat sich die Einführung eines axialen Bewegungsspielraumes in die Verbindung zwischen Scheibe und Federkörper in Form eines axialen Freiweges der Dämpfungsscheibe — wie beispielsweise in der DE-A-3 233 456 beschrieben — mit dem Ziel einer Abkoppelung der Dämpfung im oberen Frequenzbereich als zweckmäßig erwiesen.

Die Erfindung nimmt von bekannten Lagern dieser Art ihren Ausgang, und es liegt ihr eine über die bisherigen Möglichkeiten hinausgehende weitere Verbesserung des akustischen Verhaltens hydraulisch gedämpfter Motorlager als Aufgabe zugrunde.

Nach der Erfindung ist in Lagern der eingangs geschilderten Gattung das Verbindungselement der Dämpfungsscheibe mit Axialspiel gelenkig beweglich an dem Stützglied des Gummifederkörpers angebracht. Die Gelenkverbindung umfaßt dabei zweckmäßig mindestens zwei Freiheitsgrade, was beispielsweise durch Ausbildung als Kugelgelenk oder durch Einbringen einer elastisch verformbaren Zwischenschicht vorzugsweise in Form einer haftend mit dem Verbindungselement und/oder mit dem Stützglied verbundenen Zwischenschicht eines elastomeren Werkstoffes sichergestellt werden kann. Die gleiche Wirkung läßt sich gemäß einer Variante der Erfindung auch erzielen, wenn das Verbindungselement aus zwei oder mehr mit Axialspiel auf einem durchlaufenden biegsamen Zugglied gelenkig gegeneinander beweglichen Teilstücken zusammengesetzt ist. In diesem Falle ist das als Seil, Kabel, Kette od. dgl. ausgebildete biegsame Zugglied zweckmäßig über das Stützglied des Gummifederkörpers hinausgeführt, um durch Verändern der Vorspannung in dem Zugglied die Dämpfung von außerhalb des Lagers willkürlich beeinflussen zu können.

Mit der Einführung der neuartigen Gelenkverbindung in die Aufhängung der Dämpfungsscheibe schafft die Erfindung neben einer Vergrößerung des in bekannten Lagern schon vorhandenen axialen Freiweges zusätzliche Bewegungsmöglichkeiten in beliebigen Querrichtungen, woraus sich in der Folge entsprechende Verbesserungen im akustischen Verhalten der Lager unabhängig von den Richtungskomponenten der Federbewegungen ergeben. Die erzielbare akustische Abkoppelung der Dämpfungsscheibe bleibt nicht mehr allein auf die Hoch- bzw. die Axialrichtung beschränkt, sondern sie wirkt sich mit der verringerten Quersteifigkeit und den ebenfalls herabgesetzten Werten für die Querdämpfung in einer freizügigen, praktisch räumlichen Entkoppelung der hydraulischen Dämpfungsvorrichtung aus. Als zusätzlicher Vorteil der erfindungsgemäßen Anordnung ist zu werten, daß die mit der üblichen starren mechanischen Verbindung zwischen Dämpfungsscheibe und Gummifederkörper stets vorhandene Gefahr von Beschädigungen durch Anschlagen der bewegten Teile an das Lagergehäuse vermieden ist.

Die Erfindung ist anhand der schematischen Darstellung verschiedener Ausführungsformen verdeutlicht. Es zeigen :

Fig. 1 einen Längsschnitt durch ein Motorlager mit über ein Kugelgelenk beweglich aufgehängter Dämpfungsscheibe ;

Fig. 2 einen Teilschnitt durch ein Motorlager mit über ein elastisches Gelenk beweglich aufgehängter Dämpfungsscheibe und

Fig. 3 einen Längsschnitt durch ein Motorlager mit in sich biegsamem Verbindungselement für die Dämpfungsscheibe.

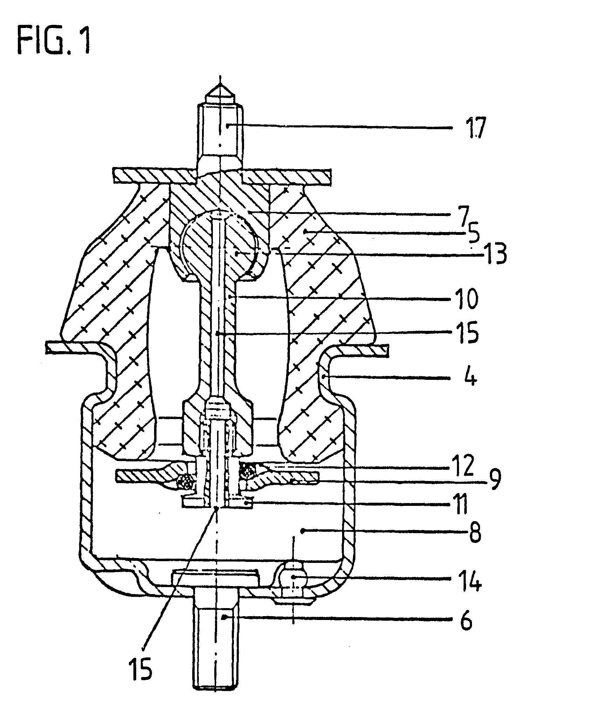

Das in Fig. 1 gezeichnete Lager setzt sich aus einem topfförmigen Gehäuse 4 aus Stahlblech, Leichtmetall oder einem anderen metallischen Werkstoff und einem in dessen Öffnung eingepreßten und formschlüssig darin gehalterten, gleichzeitig auch seinen oberen Abschluß bildenden ringförmigen Gummifederkörper 5 zusammen. Im Einbauzustand ist es mittels einer in das Gehäuse eingesetzten Schraube 6 an einem nichtgezeichneten tragenden Bauteil des Kraftfahrzeuges befestigt, während der ebenfalls nicht weiter dargestellte abgestützte Motor unmittelbar auf einem in haftender Bindung mit dem Gummifederkörper zusammenhängenden oberen Anschlußteil 7 mit Gewindestift 17 aufliegt und über diesen sein anteiliges Gewicht auf den Federkörper aufgibt. Über eine durch einen Stopfen 14 verschließbare Füllbohrung kann das Gehäuse 4 mit einer Dämpfungsflüssigkeit 8 aufgefüllt werden. Die Dämpfungsflüssigkeit nimmt zweckmäßig den gesamten Gehäuseinnenraum einschließlich des Hohlraumes unter dem Gummifederkörper 5 ohne Luftblasenbildung ein.

Eine starre metallische Dämpfungsscheibe 9 ist über ein spindelartiges Verbindungselement 10 an dem oberen Anschlußteil 7 aufgehängt und innerhalb der Dämpfungsflüssigkeit 8 in Abhängigkeit von den Verformungen des Gummifederkörpers 5 beweglich angeordnet. Sie ist mit Hilfe einer Kopfschraube 11 mit einem begrenzten Axialspiel verschiebbar an dem Verbindungselement 10 angebracht, so daß sie im Ablauf der Federbewegungen erst nach Überschreiten bestimmter Grenzamplituden angestoßen wird. Ihre gezeichnete Mittellage wird dabei durch einen in Auskröpfungen ihres Innenumfanges eingelegten Weichgummiring 12 elastisch nachgiebig fixiert.

Erfindungsgemäß ist das Verbindungselement 10 mit einer kugeligen Verdickung 13 in eine kalottenförmige Ausnehmung des Anschlußteiles 7 eingesetzt und bildet mit diesem ein Kugelgelenk, das ihm Auslenkbewegungen nach allen Richtungen hin erlaubt. Die Aufnahmekalotte ist geringfügig größer als die Verdickung 13 bemessen, so daß von vornherein ein den Freiweg der Dämpfungsscheibe 9 ergänzendes Axialspiel gegeben ist. Durch eine über die ganze Länge des Verbindungselementes 10 geführte beidseitig offene und durch die Kopfschraube 11 sich fortsetzende Hohlbohrung 15 steht der Kugelkalottenraum in ständiger Verbindung mit dem Gehäuseinnern, so daß Dämpfungsflüssigkeit als Schmiermittel zwischen die gegeneinander beweglichen Teile des Kugelgelenkes ungehindert eindringen kann und Klappergeräusche zuverlässig unterbunden sind.

Die gelenkige Aufhängung der Dämpfungsscheibe 9 hat im Gebrauch der Lager eine erwünschte akustische Abkoppelung des Dämpfungsmechanismus in allen Querrichtungen zusätzlich zu der Abkoppelung in Hochrichtung zur Folge.

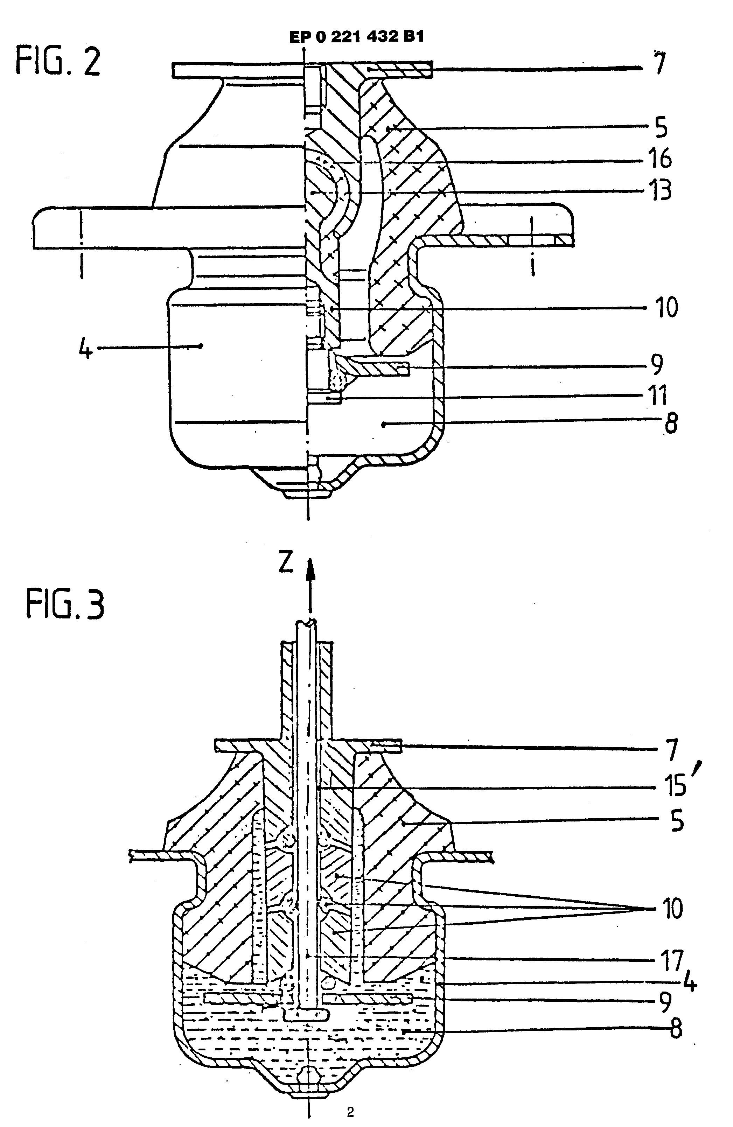

Die gleiche Wirkung wird in der Ausführungsform gemäß Fig. 2 durch Einfügen einer elastisch verformbaren Gummizwischenschicht 16 zwischen die das Gelenk bildenden Teile 7 und 13 erzielt, wobei sich zusätzlich aus dem Elastizitätsverhalten des Gummis noch eine den Gelenkausschlägen stets entgegengerichtete Rückstellkraft ergibt. Mit der Federsteifigkeit des Gummis läßt sich die erzielbare Querdämpfung in bestimmten Grenzen beeinflussen. Die Zwischenschicht 16 kann beispielsweise als vorgeformtes Bauteil eingesetzt oder aber auch wahlweise stattdessen mit haftender Bindung an einem oder an beiden Gelenkteilen in den Gelenkbereich eingepreßt oder anderweitig eingebracht werden.

In der Ausführungsform gemäß Fig. 3 ist das Verbindungselement 10 selbst aus mehreren gelenkig miteinander zusammenhängenden Teilstücken zusammengesetzt und in sich biegsam ausgebildet. Eine durch die Teilstücke geführte und durch das Anschlußteil 7 sich fortsetzende Bohrung 15' nimmt ein biegsames Zugelement 17 auf, das seinerseits anstelle der üblichen Kopfschraube die Verbindung mit der Dämpfungsscheibe 9 herstellt und einer regelbaren Zugkraft im Sinne des Pfeiles Z unterworfen werden kann. Es wird damit möglich, die erzielbare Dämpfung von außerhalb des Lagers zu beeinflussen und gegebenenfalls durch Verriegeln der beweglichen Teile gegeneinander die Dämpfungseinrichtung vorübergehend ganz auszuschalten.

## Patentansprüche

1. Hydraulisch gedämpftes elastisches Lager, insbesondere für den Antriebsmotor in Kraftfahrzeugen, mit einem ein flüssiges Dämpfungsmedium (8) enthaltenden Lagergehäuse (4) und einem dies Lagergehäuse abschließenden Gummifederkörper (5), der ein die Belastungskräfte des Lagers aufnehmendes metallisches Stützglied (7) trägt, sowie einer in das Dämpfungsmedium (8) eintauchenden starren Dämpfungsscheibe (9), die mit Axialspiel am freien Ende eines mit dem Stützglied (7) verbundenen und in axialer Richtung zug- und druckfesten Verbindungselements (10) gelagert ist, dadurch gekennzeichnet, daß das Verbindungselement (10) gelenkig und mit Axialspiel an dem Stützglied (7) gelagert ist, wobei der Axialspielraum mit einem Dämpfungsmedium ausgefüllt ist.

2. Lager nach Anspruch 1, dadurch gekennzeichnet, daß das Verbindungselement (10) mit mindestens zwei Freiheitsgraden gelenkig beweglich an dem Stützglied (7) angebracht ist.

3. Lager nach Anspruch 2, dadurch gekennzeichnet, daß das Verbindungselement (10) mittels eines Kugelgelenkes an dem Stützglied (7) angebracht ist.

4. Lager nach Anspruch 3, dadurch gekennzeichnet, daß das Verbindungselement (10) an seinem dem Stützglied (7) zugekehrten Ende mit einer in eine kalottenförmige Ausnehmung des Stützgliedes eingesetzten kugeligen Verdickung (13) ausgebildet ist.

5. Lager nach Anspruch 4, dadurch gekennzeichnet, daß das Verbindungselement (10) mit einer nach beiden Enden offenen axial durchgehenden Bohrung (15) ausgebildet ist.

6. Lager nach Anspruch 2, dadurch gekennzeichnet, daß das Verbindungselement (10) mittels einer elastisch verformbaren Zwischenschicht (16) an dem Stützglied (7) angebracht ist.

7. Lager nach Anspruch 6, dadurch gekennzeichnet, daß das Verbindungselement (10) mittels einer haftend mit ihm und/oder mit dem Stützglied verbundenen Zwischenschicht (16) eines elastomeren Werkstoffes an dem Stützglied angebracht ist.

8. Lager nach Anspruch 6, dadurch gekennzeichnet, daß eine Zwischenschicht (16) eines elastomeren Werkstoffes mit formschlüssiger Verbindung zwischen das Verbindungselement (10) und das Stützglied (7) eingesetzt ist.

9. Lager nach Anspruch 1, dadurch gekennzeichnet, daß das Verbindungselement (10) aus zwei oder mehr mit Axialspiel auf einem durchlaufenden biegsamen Zugglied (17) gelenkig gegeneinander beweglichen Teilstücken zusammengesetzt ist.

10. Lager nach Anspruch 9, dadurch gekennzeichnet, daß das als Seil, Kabel, Kette od. dgl. ausgebildete biegsame Zugglied (17) über das Stützglied (7) des Gummifederkörpers (5) hinausgeführt ist.

## Claims

1. Hydraulically damped elastic mounting, more especially for the driving motor in automotive vehicles, having a mounting housing (4), which contains a fluid damping medium (8), a resilient rubber body (5) which seals this mounting housing and is provided with a metallic supporting member (7) for absorbing the load forces of the mounting, and a rigid damping plate (9) which extends into the damping medium (8) and is mounted, with axial play, on the free end of a connecting element (10), which is connected to the supporting member (7) and is substantially inextensible and pressure-resistant in the axial direction, characterised in that the connecting element (10) is mounted on the supporting member (7) in a pivotal manner and with axial play, the axial play area being filled with a damping medium.

2. Mounting according to claim 1, characterised in that the connecting element (10) is attached to the supporting member (7) in a pivotally displaceable manner with at least two axes of freedom.

3. Mounting according to claim 2, characterised in that the connecting element (10) is attached to the supporting member (7) by means of a ball joint.

4. Mounting according to claim 3, characterised in that the connecting element (10), at its end facing the supporting member (7), is provided with a spherical thickened portion (13) which is inserted into a dome-shaped recess in the supporting member.

5. Mounting according to claim 4, characterised in that the connecting element (10) is provided with an axially extending bore (15) which is open at both ends.

6. Mounting according to claim 2, characterised in that the connecting element (10) is attached to the supporting member (7) by means of an elastically deformable intermediate layer (16).

7. Mounting according to claim 6, characterised in that the connecting element (10) is attached to the supporting member by means of an intermediate layer (16) which is formed from an elastomeric material and is adhesively connected to the connecting element and/or to the supporting member.

8. Mounting according to claim 6, characterised in that an intermediate layer (16), formed from an elastomeric material, is inserted, with a form-fitting connection, between the connecting element (10) and the supporting member (7).

9. Mounting according to claim 1, characterised in that the connecting element (10) comprises two or more parts which are pivotally displaceable relative to one another, with axial play, on a continuous, flexible tension member (17).

10. Mounting according to claim 9, characterised in that the flexible tension member (17), which is the form of a rope, cable, chain or the like, extends beyond the supporting member (7) of the resilient rubber body (5).

**Revendications**

1. Support élastique à amortissement hydraulique, notamment pour moteur d'entraînement de véhicule automobile, comportant un carter (4) contenant un agent liquide d'amortissement (8) et un corps élastique en caoutchouc (5) obturant le carter du support et qui porte un organe métallique d'appui (7) absorbant les forces de sollicitation du support, ainsi qu'un disque rigide d'amortissement (9) pénétrant dans l'agent d'amortissement (8) et qui est monté avec un jeu axial à l'extrémité libre d'un élément de liaison (10) relié à l'organe d'appui (7) et résistant à la traction et à la compression dans une direction axiale, caractérisé en ce que l'élément de liaison (10) est monté de façon articulée et avec un jeu axial sur l'organe d'appui (7), le volume de jeu axial étant rempli d'un agent d'amortissement.

2. Support selon la revendication 1, caractérisé en ce que l'élément de liaison (10) est monté avec au moins deux degrés de liberté, de façon articulée et avec possibilité de mouvement, sur l'organe d'appui (7).

3. Support selon la revendication 2, caractérisé en ce que l'élément de liaison (10) est monté sur l'organe d'appui (7) à l'aide d'une articulation à rotule.

4. Support selon la revendication 3, caractérisé en ce que l'élément de liaison (10) est pourvu, à son extrémité dirigée vers l'organe d'appui (7), d'une surépaisseur (13) de forme sphérique et engagée dans un évidement en forme de calotte de l'organe d'appui.

5. Support selon la revendication 4, caractérisé en ce que l'élément de liaison (10) est pourvu d'un trou (15) le traversant axialement et ouvert aux deux extrémités.

6. Support selon la revendication 2, caractérisé en ce que l'élément de liaison (10) est monté sur l'organe d'appui (7) au moyen d'une couche intermédiaire (16) élastiquement déformable.

7. Support selon la revendication 6, caractérisé en ce que l'élément de liaison (10) est monté sur l'organe d'appui au moyen d'une couche intermédiaire (16), formée d'un matériau élastomère et reliée de façon adhérente avec lui et/ou avec l'organe d'appui.

8. Support selon la revendication 6, caractérisé en ce qu'une couche intermédiaire (16) d'un matériau élastomère est interposée entre l'élément de liaison (10) et l'organe d'appui (7) avec liaison par conjugaison de formes.

9. Support selon la revendication 1, caractérisé en ce que l'élément de liaison (10) est composé de deux ou plus de deux pièces, mobiles de façon articulée l'une par rapport à l'autre, avec un jeu axial sur un organe de traction flexible et traversant (17).

10. Support selon la revendication 9, caractérisé en ce que l'organe de traction flexible (17), agencé comme un câble, un filin, une chaîne ou analogue, est guidé vers l'extérieur à travers l'organe d'appui (7) du corps élastique en caoutchouc (5).

FIG.1

FIG. 2

EP 0 221 432 B1

FIG. 3

Z